# EUROPEAN PATENT APPLICATION

(11) **EP 4 400 943 A1**
(43) Date of publication of application: **17.07.2024**
(21) Application number: 23151417.5
(22) Date of filing: 12.01.2023
(51) Int. Cl.: G06F 3/01, A63F 13/213, G06F 3/04815

(54) **TOUCHLESS CONTROL METHOD, SYSTEM, COMPUTER PROGRAM AND COMPUTER-READABLE MEDIUM FOR CONTROLLING AN AVATAR**

(71) Applicant: AMERIA AG, 69124 Heidelberg (DE)
(72) Inventor: Metter, Albrecht, 69120 Heidelberg (DE); Rothvoss Buchheimer, Maria, 69214 Eppelheim (DE); Schneider, Franziska, 76275 Ettlingen (DE); Seiler, Martin, 79238 Ehrenkirchen (DE)
(74) Representative: Best, Bastian

(57) **Abstract**

According to a first aspect of the present invention, a computer-implemented touchless control method for controlling an avatar in a virtual environment is provided. The method may comprise displaying, using a display means, the avatar in the virtual environment. The display means may be an essentially stationary display means arrangeable essentially in front of a user such that the user can view the display means without being physically connected to the display means, such as an electronic display screen or a projection surface. The method may comprise detecting, using at least one 3D-sensor device, a hand of the user in an interaction space arranged in front of the display means. The method may comprise displaying, using the display means, a virtual control means. The method may comprise associating the detected hand of the user with the virtual control means if an association condition is met. The method may comprise capturing orientation and/or position and/or movement of the hand. The method may comprise generating control commands causing the avatar to perform actions corresponding to the control commands based at least in part on the captured orientation and/or position and/or movement of the hand.

## Description

### TECHNICAL FIELD

The present invention generally relates to techniques for controlling a touchless user interface, and more particularly to a touchless control method for controlling an avatar in a virtual environment. Further, the present invention relates to a data processing apparatus for carrying out a touchless user interface control method and to a computer program corresponding to the touchless control method.

### BACKGROUND

Display means have nowadays become omnipresent in various areas of modern life. Examples include electronic display screens or electronic display projectors in public places which provide useful information to the user, e.g., in shopping malls, trade shows, train stations, airports, and the like, a field which is commonly termed "digital signage". Further examples include various gaming applications, e.g., role playing games, simulation games, sports games, action-adventure games, survival games, shooters or real-time strategy games. In most of the gaming applications a virtual environment is provided, wherein the user may control an avatar and/or interact with the virtual environment. One form of display means which are commonly used for the above-mentioned applications are touchscreens that provide a user interface including interactive functions to allow users to interact with the displayed content, e.g., by selecting control elements such as buttons, selecting items from a list, controlling a cursor, and the like. In the field of gaming, in particular the emulation of a classical gamepad is a usual interface for the user to provide input. Also, public gaming machines, for example in arcades or gambling halls are often provided with touchscreens or display means which are connected to a physical gamepad.

However, not least because of the recent COVID-19 pandemic, users have become hesitant to use touchscreens or other physical control means such as gamepads when multiple people interact with the same display means or when display means at public places are used. This has created a desire to provide input capabilities, in particular gesture control, without having to physically touch the display. Some commercial products have already addressed this desire, for example:
The touchless air gesture technology of Gestoos (https://gestoos.com/) aims at transforming touch screens or digital displays into a touch-free experience. The Gestoos technology uses a depth sensor to allow the user to control the mouse cursor of the operating system, mapping the finger coordinates to its screen position, while the fingers stay at a distance from the screen.

GLAMOS (https://www.kickstarter.com/projects/300948436/glamos-bring-your-touchless-screens-to-life), sets out to use lidar technology to turn screens into interactive touch screens.

AlRxTOUCH (https://www.airxtouch.com/) provides an all-in-one touchless interactive kiosk. Depth sensors detect the user's finger before it touches the display and generates click events. The related international patent application WO 2015/139969 provides technological background.

Touchjet (https://www.touchjet.com/wave-lily/) aims at turning flat screen TVs into a tablet for collaboration and interactive presentations using a digital pen.

Ultraleap (https://developer.leapmotion.com/touchfreel) provides leapmotion, which is a small device (infrared camera) with relatively small range for hand tracking and hand gesture recognition. The system uses a single camera, so that the hand recognition precision is limited and decreases the bigger the screen is.

The known technologies provide the control of a touchless user interface based on detecting an input object, e.g., an input device or a hand. However, the existing solutions on the market are improvable with regard to the smooth and stable user experience, e.g., for reliably detecting touchless control input and providing comprehensible feedback for the user.

Further, as for gaming, a particularly high precision of input is desirable, there is a need to provide a method that fulfills this requirement and at the same time provides a positive user experience. Existing solutions are either not suitable for gaming due to a low precision or are not convenient due to non-intuitive control configurations.

It is therefore the technical problem underlying the present invention to provide an improved touchless control method for controlling an avatar in a virtual environment and thereby overcome the above-mentioned disadvantages of the prior art at least in part.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, a computer-implemented touchless control method for controlling an avatar in a virtual environment is provided. The method may comprise displaying, using a display means, the avatar in the virtual environment. The display means may be an essentially stationary display means arrangeable essentially in front of a user such that the user can view the display means without being physically connected to the display means, such as an electronic display screen or a projection surface. The method may comprise detecting, using at least one 3D-sensor device, a hand of the user in an interaction space arranged in front of the display means. The method may comprise displaying, using the display means, a virtual control means. The method may comprise associating the detected hand of the user with the virtual control means if an association condition is met. The method may comprise capturing orientation and/or position and/or movement of the hand. The method may comprise generating control commands causing the avatar to perform actions corresponding to the control commands based at least in part on the captured orientation and/or position and/or movement of the hand.

Examples for essentially stationary display means are a projection surface, projector assemblies including a projector and a projection surface, electronic display screens such as LCD screens or LED screens, and holographic display means. The fact that the display means is essentially stationary may mean that the display means does not need to be moved by the user, or is not moved by the user, while the user controls the avatar, or that the display means does not move to a significant degree during operation of the method.

In an alternative embodiment, which shall be part of the present disclosure, the display means may be a non-stationary display means, also referred to as a mobile display means, a user-held display means or a user-carried display means, such as a Virtual Reality device and/or an Augmented Reality device, for example built as glasses, as a head-mounted display or in another suitable form factor.

The display means may for example display the avatar in the third-person perspective. The third-person perspective is a camera perspective, in particular for computer games, in which the point from which the user views the game is outside the controlled avatar and the avatar itself can be seen, for example from behind. The third-person perspective is mainly used in adventure games, role-playing games and action games. Further distinctions are made according to the two- or three-dimensionality of the representation as well as the arrangement of the avatar and possible enemies. Two-dimensional third-person games can be distinguished according to vertical or horizontal (sidescroller) orientation or orientation in both dimensions. Three-dimensional third-person games are further subdivided into games with a chaser perspective, fixed camera angle or bird's eye view, as it is common in real-time strategy games and action role-playing games.

In the chaser perspective, the camera is in a fixed position behind the avatar and is freely steered in sync with the avatar, for example based on the viewing direction of the avatar which may be controlled by the user. It is standard for third-person shooters and widely used for role-playing games, action-adventures and 3D jump-and-runs. It has great similarity to the first-person perspective in terms of handling and is also optional to it in some games. In contrast to the first-person perspective, the chaser perspective allows better handling of blank weapons and martial arts-like attacks, since more of the body of the avatar can be seen. On the other hand, it is considered less involving compared to the first-person perspective because it does not directly replicate the avatar's "world view" and thus the level of immersion is lower.

In the third-person perspective with fixed camera angles, the avatar moves through sceneries in the virtual environment, each of which is displayed with fixed camera settings. This means that the avatar can move freely in space, but the camera cannot. This is intended to achieve a film-like, dramatizing or suspense-generating effect. The avatar can be seen from different angles one after the other. The control scheme can be either relative to the orientation of the avatar or relative to the current camera angle. The third-person perspective with fixed camera angles is very common in the survival horror subgenre and is generally used in many action-adventure games.

The bird's eye view shows the avatar from above, with the camera at a much greater distance from the character than in the chaser view. It provides a good overview of the avatar's immediate surroundings in the virtual environment. Often even adjacent rooms can be seen by displaying them without a ceiling. Because of its clarity, the bird's eye view is often used in games with a pronounced tactical component. The bird's eye view is standard in strategy games and is also often used in role-playing games.

The counterpart to the third-person perspective is the first-person perspective. In video games, first-person perspective is rendered from the viewpoint of the avatar, or from the viewpoint of a cockpit or front seat of a vehicle driven by the avatar. The most popular type of first-person video game today is the first-person shooter. Many other genres incorporate first-person perspectives, including other types of shooter games, adventure games, flight simulations, racing games, role-playing video games, and vehicle simulations.

The present invention is applicable to all of the above-mentioned perspectives but is particularly advantageous in combination with a third-person perspective. In particular, experience and testing have shown that the intuitively designed touchless control method according to the present invention provides a particularly appealing and easy to learn user experience when a chaser perspective is provided.

The term avatar may be understood to be a virtual character, such as a virtual person or a virtual animal, or virtual object, such as a virtual vehicle or a virtual airplane, which is configured to be controlled by the user. In particular, the avatar may be controlled by the user to move through the virtual environment and/or to interact with the virtual environment and/or to transform the virtual environment. The term virtual environment may for example be a virtual world in which a game takes place.

The 3D-sensor device may be a sensor device, a sensor assembly or a sensor array which is able to capture the relevant information in order to translate a movement and/or position and/or orientation of a user's hand into control commands. In particular, depth information may be capturable by the 3D-sensor device. It may be placed such as to observe an interaction space which may for example be a space between the user and the display means. In a preferred embodiment, at least two 3D-sensor devices are provided and placed such as to observe the interaction space. The 3D-sensor device may preferably be a depth camera. An example for a depth camera is the Intel RealSense depth camera.

The term virtual control means may be understood to be a visually displayed control pad, in particular replacing a gamepad and/or joystick. For example, the virtual control means may have an essentially spherical or essentially hemispherical structure, in particular in the shape of a bubble or a part of a bubble which is displayed on the display means. It may also comprise indicators such as a pointer, a color scheme or symbols to provide the user with feedback corresponding to the control commands that are generated based on the user input. The virtual control means is described in detail further below.

Generating control commands based on orientation and/or position and/or movement of a user's hand is particularly smooth and can be performed continuously without interruptions, jumps or leaps, if the virtual control means and the user's hand are associated. In other words: During an interaction of the user, the hand may move around and continuously change its position which may occasionally result in control interruptions and thus negatively affect the user experience. By associating the user's hand with the virtual control means, such interruptions are avoided for the benefit of the user experience. Once the hand and the virtual control means are associated with each other, losing or confusing the hand with other body parts or objects is efficiently avoided.

For associating the user's hand and the virtual control means, an association condition may be used. Such association condition may require the user to perform a specific user input, such as a gesture, successive gestures, pressing a button, input voice commands and/or the like. For example, a detected hand of a user may be initially displayed on the display means before the association condition is met, so that the user can easily see and decide whether the correct hand which is intended for interaction is detected. Based on the initially displayed hand, the user may perform a gesture, for example a double click gesture moving the hand back and forth towards the display means, if such gesture is set to be the association condition.

It may be provided that the user can choose between different association conditions and/or define individual association conditions. For example, residents of retirement homes may not be able to perform certain gestures, such as fast double click gestures, due to handicaps. Thus, for example a voice command may be chosen and/or defined to be the association condition. By the individualization option with respect to the association condition, the usability is enhanced.

The step of generating control commands based on at least a part of the captured orientation and/or position and/or movement of the user's hand may be performed based on an underlying control scheme. The control scheme may include information about which respective orientation and/or position and/or movement of the user's hand should be translated into which control commands.

It may be provided that the control scheme is predefined. Optionally, at least two control schemes are predefined and available for the user to choose from. Alternatively or additionally, the control scheme may at least partially be adaptable by the user. By that, the control scheme can be tailored to the user's needs, preferences and physical abilities, for example if the user is handicapped. This increases the versatility of the present invention and creates a wide range of possible usage options.

It may be provided that the control commands include at least two control command types in the virtual environment, preferably including controlling the movement and controlling the perspective of the avatar, wherein the at least two control command types are jointly generated based at least in part on the captured hand of the user which is one single hand.

The widely known and common physical gamepads or touch-based gamepads usually have two control joysticks each of which is directed to a different command type. Usually, one joystick is used to control the perspective of the avatar, which is the first command type, while the other joystick is used to control the movement of the avatar, which is the second command type. The user thus has to control the avatar with both hands and coordinate his two hands to control the avatar as intended. This requires practice and is associated with a learning phase for untrained persons or, if necessary, impossible for elderly persons, for example. With the aforementioned combination of features, different command types are merged and become intuitively controllable with one single hand. For example the orientation of the hand may be translated into control commands which cause the avatar to change the perspective, while the position of the hand, e.g., the distance between the hand and the display means, may be translated into a movement of the avatar and/or a movement speed of the avatar in the virtual environment. This significantly increases usability and the intuitiveness of use.

Often, apart from the two above-mentioned command types, there is a third command type including for example specific actions of the avatar. For these commands, a common physical gamepads or touch-based gamepads usually provide several buttons to press. Also such a third command type may be merged into the touchless control method according to the present invention, for example by including click gestures or the like.

It may be provided that the distance between the display means and the user's hand is translated into a movement speed of the avatar; and optionally, wherein a smaller distance is translated into a higher movement speed wherein a larger distance is translated into a lower movement speed.

The method may provide that the orientation of the user's hand relative to the display means, preferably a surface thereof, is translated into a movement direction and/or perspective or the avatar.

It may be provided that the movement of the user's hand relative to the display means, preferably a surface thereof, in particular a tilting and/or panning and/or rolling movement, is translated into control commands causing the avatar to perform an associated action within the virtual environment. Optionally, tilting the user's hand causes the avatar to tilt; and/or panning the user's hand causes the avatar to pan; and/or rolling the user's hand causes the avatar to roll.

It may be provided that the interaction space comprises at least a hovering area and a movement area, wherein the movement area is closer to the display means than the hovering area, wherein in the hovering area the perspective of the avatar is controllable by the user's hand, and wherein in the movement area the perspective and the movement of the avatar is controllable by the user's hand.

Further, the method provide that if the hand of the user is in the hovering area, the captured orientation and/or position and/or movement of the hand is translated into control commands causing the avatar to change perspective, and if the hand of the user is in the movement area, the captured orientation and/or position and/or movement of the hand is translated into control commands causing the avatar to move in a respective direction and/or to change its moving speed and/or to change perspective.

It may be provided that the at least one 3D-sensor device is at least one depth camera. Benefits of using depth cameras are described above.

Further, it may be provided that at least a first and a second 3D-sensor device is used, the first and the second 3D-sensor device observing an interaction space for users each generating an image data stream, wherein optionally the first and the second 3D-sensor device are arranged on opposing sides of the interaction space.

The more 3D-sensor devices, e.g., depth cameras, are used, the higher is the precision of capturing a user's hand and its orientation and/or position and/or movement. In particular, using two 3D-sensor device allows to gather a 360-degree view of the user's hand and to precisely track all movements for generating the respectively intended control commands.

It may be provided that the method is performed for a plurality of users, wherein the display means displays a plurality of virtual avatars in the virtual environment and displays for each avatar a virtual control means, and preferably wherein for each detected user's hand, a selection of one respective virtual avatar and one respective virtual control means is performed, in particular based on a user input.

The aforementioned combination of features makes it possible to host and enable collaborative video games where the participating individuals are at least partially in the same room and preferably at the same display means. For example, interactive and entertaining events can be organized in schools, retirement homes or other institutions, where the video game is a contributing element.

Due to the particularly advantageous intuitive control according to the present invention, which hardly requires any explanation, experienced and inexperienced users can meet at eye level and enjoy the game together. Thus, intergenerational groups can play a game together without too much difference in gaming success occurring due to existing gaming experience.

The method may provide that the displayed virtual control means is continuously displayed and/or accompanies the avatar moving with it through the virtual environment.

For example, if the avatar is always followed by the virtual control means, a user can always keep track of his virtual control means without taking his eyes off the avatar. This makes it especially easy to play on very large screens. Furthermore, if several people play together on the same display means, each user can easily identify his virtual control means and the risk of confusion is avoided.

In a preferred embodiment the virtual control means may be transparent such that it does not hide any part of the avatar or virtual environment. Thus, the virtual control means does not interfere with the user experience.

It may be provided that the virtual control means is an essentially spherical or essentially hemispherical structure, optionally including a virtual control pointer within the structure indicating a respectively captured orientation and/or position and/or movement of the hand.

In particular, the virtual control means may have the shape of a bubble or a part of a bubble which is displayed on the display means. An essentially spherical or hemispherical shape of the virtual control means has proven to be particularly user-friendly, as it optimally visualizes the degrees of freedom the user has for his interaction. This results in a very intuitive user experience.

It may be provided that the virtual control means includes colored indicators and/or symbols providing the user with information about the control commands.

By adding indicators such as a pointer, a color scheme or symbols to the virtual control means, the user is provided with feedback corresponding to the control commands that are generated based on the user input. This is useful for the user in several respects. On the one hand, he can see at any time during an interaction which control commands were generated and, if necessary, adjust his hand movement if undesired control commands were implemented. On the other hand, even though the present invention is very intuitive and requires little explanation, the user can achieve a certain learning effect to become familiar with the control scheme.

Alternatively or additionally, it may be provided that an audio output is generated providing the user with information about the control commands. An audio output is particularly advantageous in order to conveniently deliver the user further useful information without overwhelming the user with too complex purely visual support.

According to a second aspect of the present invention, the use of a at least one, preferably at least two, depth camera(s) in a method according to the first aspect of the present invention may be provided.

According to a third aspect of the present invention, a data processing apparatus may be provided, comprising means for carrying out at least part of the method according to the first aspect of the present invention.

According to a fourth aspect of the present invention, a computer program may be provided, comprising instructions which, when the program is executed by a computer, cause the computer to carry out the method according to the first aspect of the present invention.

All technical implementation details and advantages described with respect to the first aspect of the present invention are self-evidently mutatis mutandis applicable for the second, third and fourth aspects of the present invention and vice versa.

### BRIEF DESCRIPTION OF THE DRAWINGS

The disclosure may be better understood by reference to the following drawings:
- Fig. 1a:: A first schematic illustration of a display means according to embodiments of the present invention.
- Fig. 1b:: A second schematic illustration of a display means according to embodiments of the present invention.
- Fig. 1c:: A third schematic illustration of a display means according to embodiments of the present invention.
- Fig. 2a:: A first schematic illustration of a scene displayed by the display means according to embodiments of the present invention.
- Fig. 2b:: A second schematic illustration of a scene displayed by the display means according to embodiments of the present invention.
- Fig. 3a:: A first schematic illustration of a virtual control means displayed by the display means according to embodiments of the present invention.
- Fig. 3b:: A second schematic illustration of a virtual control means displayed by the display means according to embodiments of the present invention.
- Fig. 4a:: A first exemplary illustration of an avatar which may be displayed by the display means according to embodiments of the present invention.
- Fig. 4b:: A second exemplary illustration of an avatar which may be displayed by the display means according to embodiments of the present invention.
- Fig. 4c:: A third exemplary illustration of an avatar which may be displayed by the display means according to embodiments of the present invention.
- Fig. 4d:: A fourth exemplary illustration of an avatar which may be displayed by the display means according to embodiments of the present invention.
- Fig. 4e:: A fifth exemplary illustration of an avatar which may be displayed by the display means according to embodiments of the present invention.
- Fig. 4f:: A sixth exemplary illustration of an avatar which may be displayed by the display means according to embodiments of the present invention.
- Fig. 5a:: A first exemplary illustration of a virtual environment which may be displayed by the display means according to embodiments of the present invention.
- Fig. 5b:: A second exemplary illustration of a virtual environment which may be displayed by the display means according to embodiments of the present invention.
- Fig. 5c:: A third exemplary illustration of a virtual environment which may be displayed by the display means according to embodiments of the present invention.
- Fig. 5d:: A fourth exemplary illustration of a virtual environment which may be displayed by the display means according to embodiments of the present invention.

### DETAILED DESCRIPTION

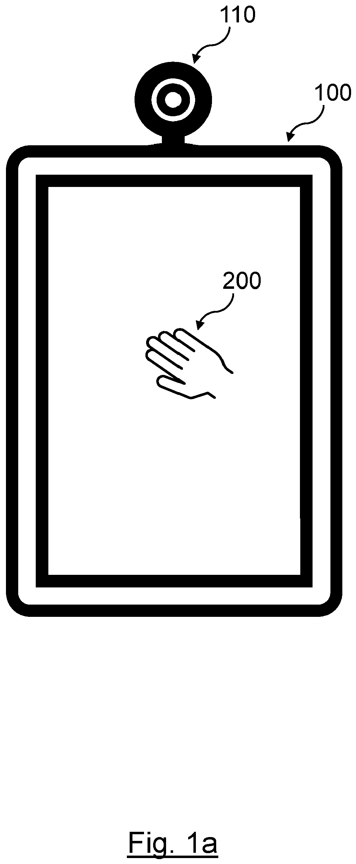

Figure 1a is a first schematic illustration of an essentially stationary display means 100. One 3D-sensor device 110 is mounted at the upper edge of the display means 100. The display means 100 displays an avatar 300 (not shown) and a virtual environment 400 (not shown) in which the avatar 300 is situated. A user may provide user input using his hand 200, wherein the user input may include an orientation and/or position and/or movement of the hand 200. The 3D-sensor device 110 accordingly captures the orientation and/or position and/or movement of the hand 200 in order to facilitate generating control commands causing the avatar 300 to perform actions corresponding to the control commands based at least in part on the captured orientation and/or position and/or movement of the hand 200.

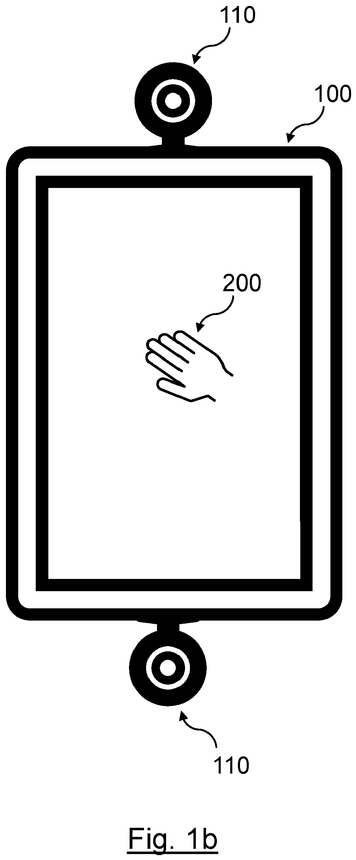

Figure 1b is a second schematic illustration of an essentially stationary display means 100 having one 3D-sensor device 110 mounted at the upper edge of the display means 100 and one 3D-sensor device 110 mounted at the lower edge of the display means 100. Through using two instead of one 3D-sensor device 110, the precision in the detection of user input, i.e., the user's hand, is advantageously enhanced.

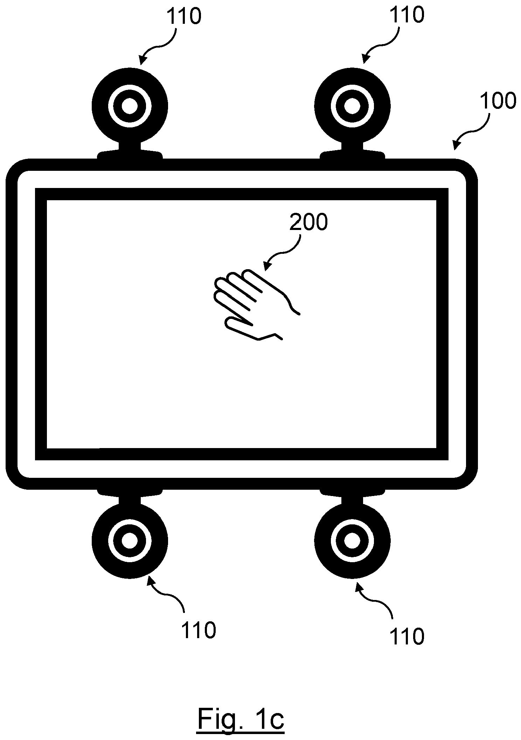

Figure 1c is a third schematic illustration of an essentially stationary display means 100 which is in landscape format, the display means 100 having in total four 3D-sensor devices 110 mounted at its edges. Two 3D-sensor devices 110 are mounted at the upper edge of the display means 100 and two 3D-sensor devices 110 are mounted at the lower edge of the display means 100. The hardware setting including four 3D-sensor devices 110 is particularly advantageous due to a further enhanced precision and usability.

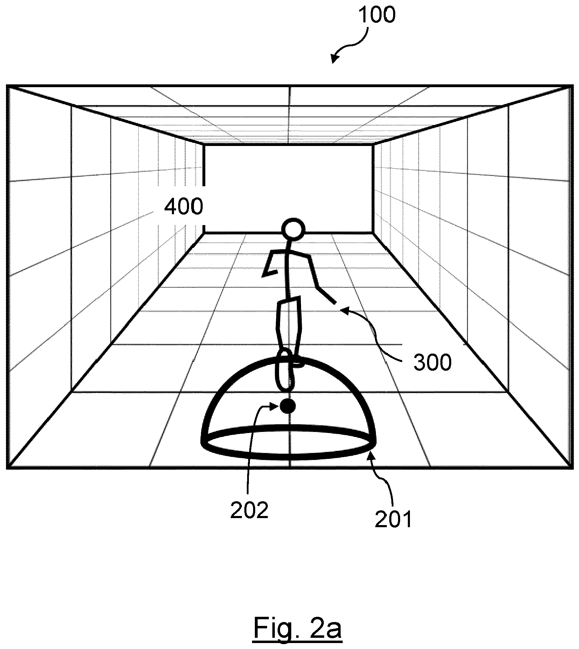

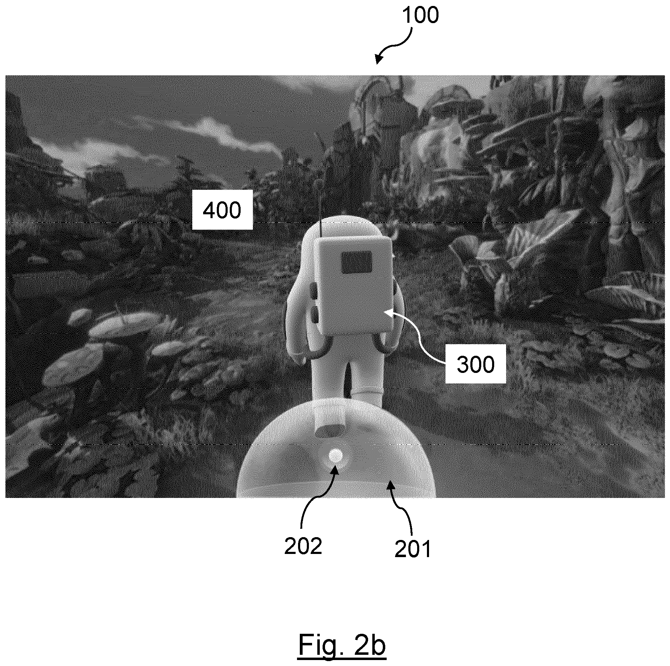

Figures 2a and 2b each schematically illustrate a scene which may be displayed by the essentially stationary display means 100. The scene includes a virtual environment 400 and an avatar 300 which is situated in the virtual environment 400. As can be seen from the detailed illustration, the avatar 300 is moving through the virtual environment 400. Further, a virtual control means 201 is depicted. The virtual control means 201 is a displayed control element which represents a control pad, in particular replacing a gamepad and/or joystick. In the embodiments of figures 2a and 2b, the virtual control means 201 has an essentially hemispherical shape, i.e., in the shape of a part of a bubble which is displayed on the display means 100. An essentially spherical or hemispherical shape of the virtual control means 201 has proven to be particularly user-friendly, as it optimally visualizes the degrees of freedom the user has for his interaction. This results in a very intuitive user experience.

The virtual control means 201 further comprises virtual control pointer 202 depicted as a black dot in this example, in order to provide the user with feedback corresponding to the control commands that are generated based on the user input. In a preferred embodiment, the position of the virtual control pointer 202 may follow the relative position of the user's hand 200 in space. If, as it is shown in figures 2a and 2b, the avatar is always followed by the virtual control means 201, a user can always keep track of his virtual control means 201 without taking his eyes off the avatar 300. This makes it especially easy to play on very large screens. Furthermore, if several people play together on the same display means 100, each user can easily identify his virtual control means 201 and the risk of confusion is avoided.

Additionally, as shown in figures 2a and 2b, the virtual control means 201 may be transparent or at least partially transparent such that it does not hide parts of the avatar 300 or virtual environment 400. Thus, the virtual control means does not interfere with the user experience.

The virtual control means 201 may additionally or alternatively include an indicator such as a color scheme or symbols to provide the user with additional information. For example, a collision of the avatar 300 in the virtual environment 400 may trigger displaying a red symbol as an indicator.

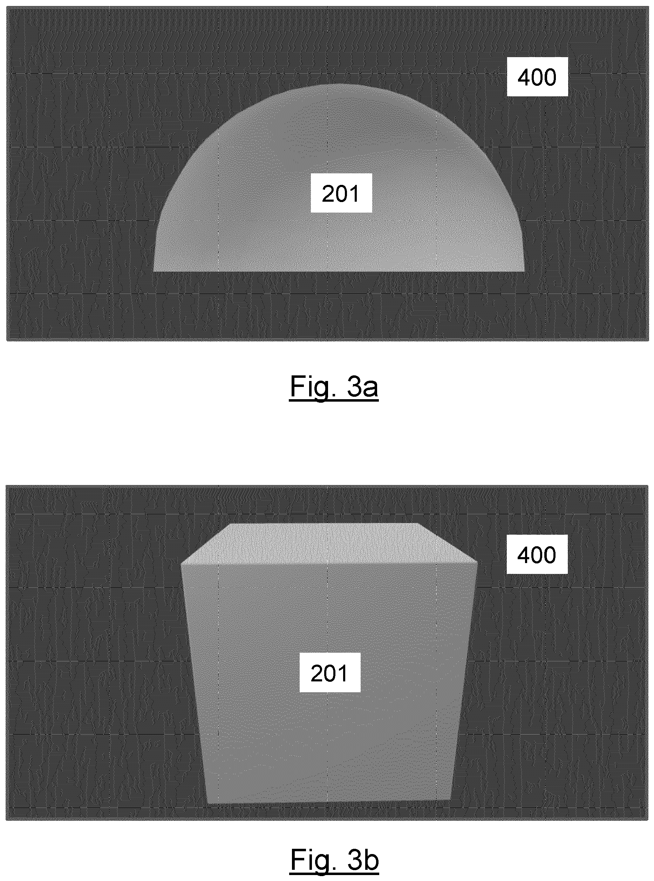

Figures 3a and 3b show exemplary shapes of virtual control means 201. The virtual control means 201 of figure 3a has a semi-hemispherical shape. The virtual control means 201 of figure 3b has an essentially cubical shape. Both shapes were found to be particularly pleasant and intuitive by users in tests.

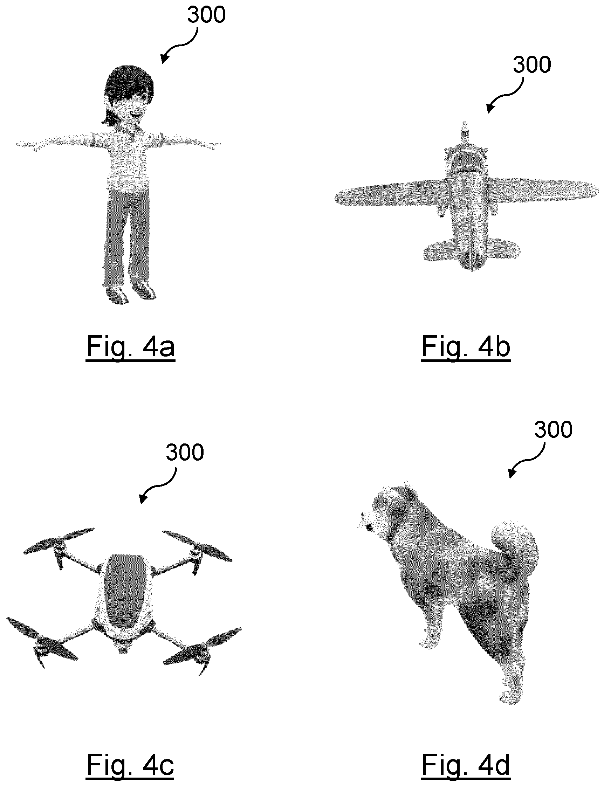

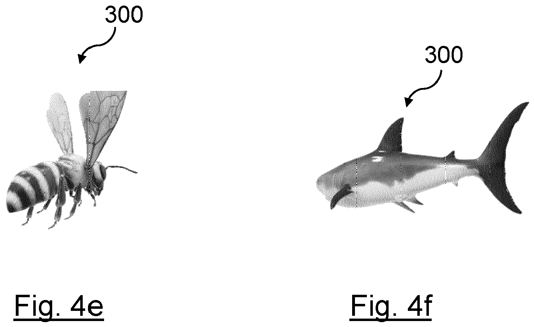

Figures 4a-4f each exemplarily show an avatar 300. In figure 4a, the avatar 300 is a virtual person. In figure 4b, the avatar 300 is a virtual airplane. In figure 4c, the avatar 300 is a virtual drone. In figure 4d, the avatar 300 is a virtual dog. In figure 4e, the avatar 300 is a virtual bee. In figure 4f, the avatar 300 is a virtual shark. Of course, the shown avatars 300 are to be understood as exemplary avatars 300 without limiting the scope of the present invention. Thus, also other avatars 300 are possible to define.

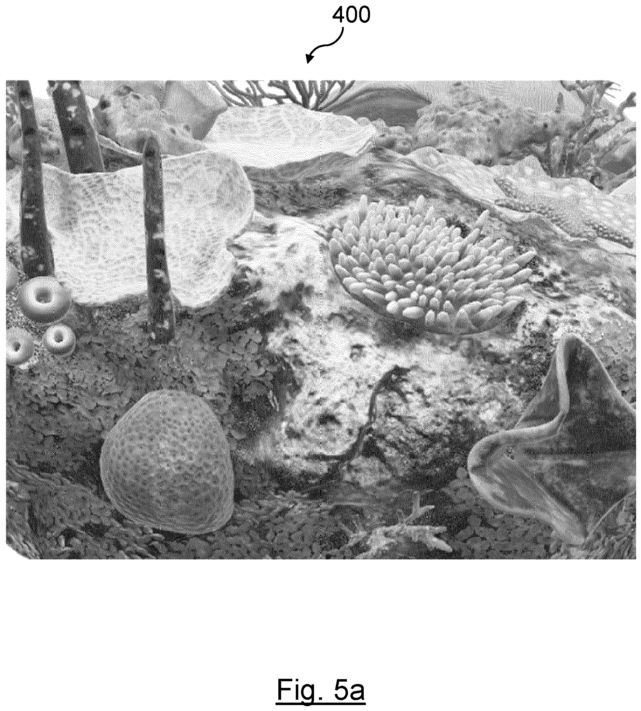

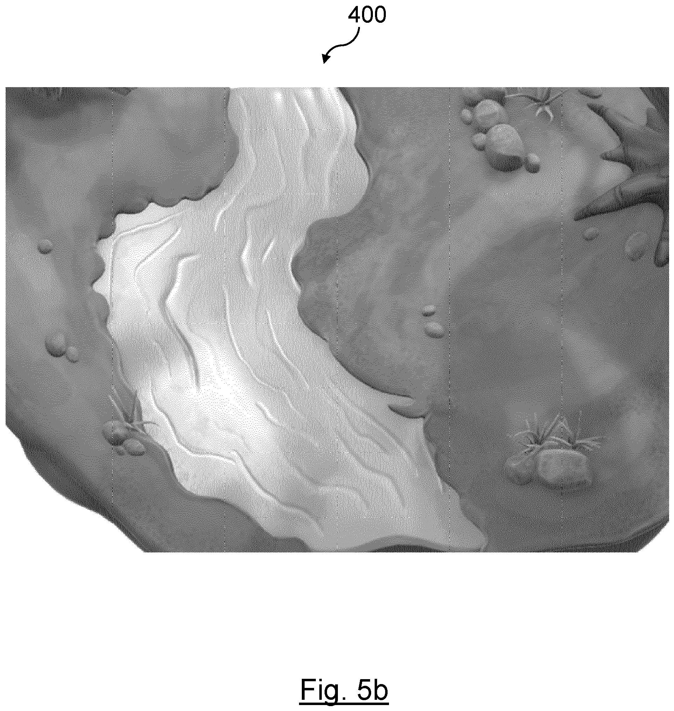

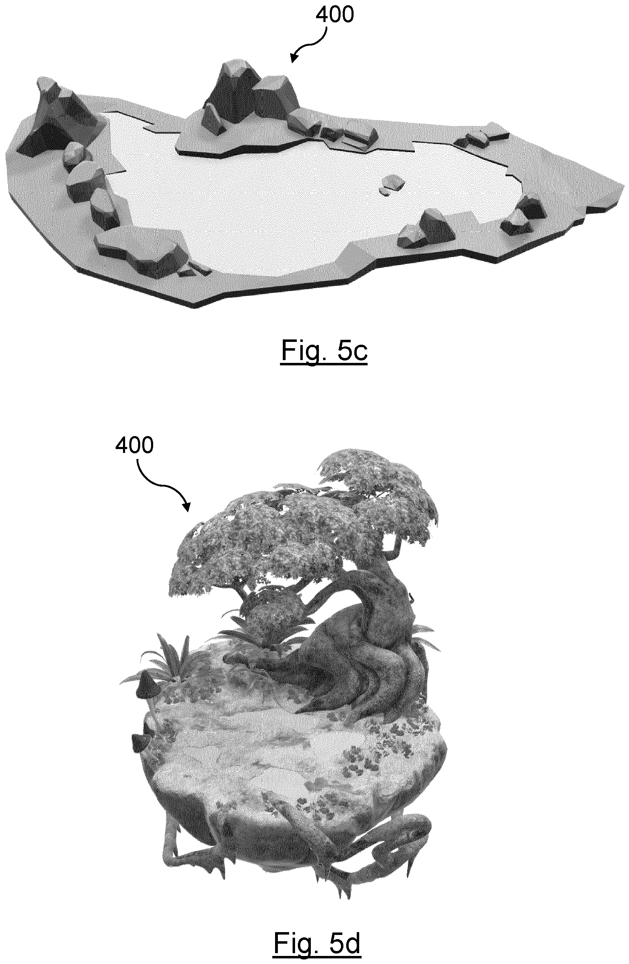

Figures 5a-5d each exemplarily show a part of a virtual environment 400. In figure 5a, the virtual environment 400 is an underwater world. In figure 5b, the virtual environment 400 is a river landscape. In figure 5c, the virtual environment 400 is a sea landscape. In figure 5d, the virtual environment 400 is a forest landscape. Of course, the shown virtual environments 400 are to be understood as exemplary virtual environments without limiting the scope of the present invention. Thus, also other virtual environments 400 are possible to define.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: display means
- 110: 3D-sensor device
- 200: hand
- 201: virtual control means
- 202: virtual control pointer
- 300: avatar
- 400: virtual environment

## Claims

1. A computer-implemented touchless control method for controlling an avatar (300) in a virtual environment (400), the method comprising:
displaying, using an essentially stationary display means (100) arrangeable essentially in front of a user such that the user can view the display means (100) without being physically connected to the display means (100), such as an electronic display screen or a projection surface, the avatar (300) in the virtual environment (400);
detecting, using at least one 3D-sensor device (110), a hand (200) of the user in an interaction space arranged in front of the display means (100);
displaying, using the display means (100), a virtual control means (201);
associating the detected hand (200) of the user with the virtual control means (201) if an association condition is met;
capturing orientation and/or position and/or movement of the hand (200); and
generating control commands causing the avatar (300) to perform actions corresponding to the control commands based at least in part on the captured orientation and/or position and/or movement of the hand (100).

2. The computer-implemented method of claim 1, wherein the control commands include at least two control command types in the virtual environment (400), preferably including controlling the movement and controlling the perspective of the avatar (300), wherein the at least two control command types are jointly generated based at least in part on the captured hand (200) of the user which is one single hand (200).

3. The computer-implemented method of any one of the preceding claims, wherein the distance between the display means (100) and the user's hand (200) is translated into a movement speed of the avatar (300); and
optionally, wherein a smaller distance is translated into a higher movement speed wherein a larger distance is translated into a lower movement speed.

4. The computer-implemented method of any one of the preceding claims, wherein the orientation of the user's hand (200) relative to the display means (100), preferably a surface thereof, is translated into a movement direction and/or perspective or the avatar (300).

5. The computer-implemented method of any one of the preceding claims, wherein the movement of the user's hand (200) relative to the display means (100), preferably a surface thereof, in particular a tilting and/or panning and/or rolling movement, is translated into control commands causing the avatar (300) to perform an associated action within the virtual environment (400); wherein, optionally,
tilting the user's hand (200) causes the avatar (300) to tilt; and/or
panning the user's hand (200) causes the avatar (300) to pan; and/or
rolling the user's hand (200) causes the avatar (300) to roll.

6. The computer-implemented method of any one of the preceding claims, wherein the interaction space comprises at least a hovering area and a movement area, wherein the movement area is closer to the display means than the hovering area, wherein in the hovering area the perspective of the avatar (400) is controllable by the user's hand (200), and wherein in the movement area the perspective and the movement of the avatar (400) is controllable by the user's hand (200).

7. The computer-implemented method of claim 6, wherein if the hand (200) of the user is in the hovering area, the captured orientation and/or position and/or movement of the hand (200) is translated into control commands causing the avatar to change perspective, and if the hand (200) of the user is in the movement area, the captured orientation and/or position and/or movement of the hand (200) is translated into control commands causing the avatar (300) to move in a respective direction and/or to change its moving speed and/or to change perspective.

8. The computer-implemented method of any one of the preceding claims, wherein the at least one 3D-sensor device (110) is at least one depth camera.

9. The computer-implemented method of claim 8, wherein at least a first and a second 3D-sensor device (110) is used, the first and the second 3D-sensor device (110) observing an interaction space for users each generating an image data stream, wherein optionally the first and the second 3D-sensor device are arranged on opposing sides of the interaction space.

10. The computer-implemented method of any one of the preceding claims, wherein the method is performed for a plurality of users, wherein the display means (100) displays a plurality of virtual avatars (300) in the virtual environment (400) and displays for each avatar (300) a virtual control means (201), and preferably wherein for each detected user's hand (200), a selection of one respective virtual avatar (300) and one respective virtual control means (201) is performed, in particular based on a user input.

11. The computer-implemented method of any one of the preceding claims, wherein the displayed virtual control means (201) is continuously displayed and/or accompanies the avatar (300) moving with it through the virtual environment (400).

12. The computer-implemented method of any one of the preceding claims, wherein the virtual control means (201) is an essentially spherical or essentially hemispherical structure, optionally including a virtual control pointer (202) within the structure indicating a respectively captured orientation and/or position and/or movement of the hand (200).

13. The computer-implemented method of any one of the preceding claims, wherein the virtual control means (201) includes colored indicators and/or symbols providing the user with information about the control commands.

14. A data processing apparatus or system comprising means for carrying out the method of any one of claims 1-13.

15. A computer program or a computer-readable medium having stored thereon a computer program, the computer program comprising instructions which, when the program is executed by a computer, cause the computer to carry out the method of any one of claims 1-13.
